# FASCICULE DE BREVET EUROPEEN

(11) **EP 0 680 844 B1**
(45) Date de publication et mention de la délivrance du brevet: **16.10.1996**
(21) Numéro de dépôt: 95400743.1
(22) Date de dépôt: 03.04.1995
(51) Int. Cl.: B60N 2/30

(54) **Siège transformable pour véhicule automobile**
Veränderbarer Kraftfahrzeugsitz
Convertible seat for a motor vehicle

(30) Priorité: 06.04.1994 FR 9404043
(43) Date de publication de la demande: 08.11.1995
(73) Titulaire: CESA COMPAGNIE EUROPEENNE DE SIEGES POUR AUTOMOBILES, F-92307 Levallois-Perret Cédex (FR)
(72) Inventeur: Humiliere, Nathalie, Florence, F-45260 Lorris (FR); Fourrey, François, F-45200 Montargis (FR); Baret, Frédéric, Louis, René, F-45200 Montargis (FR)
(74) Mandataire: Polus, Camille

(56) Documents cités:
- EP-A- 0 556 511
- FR-A- 2 613 672
- FR-A- 2 677 588
- FR-A- 2 692 209
- FR-A- 2 693 688

## Description

La présente invention concerne les sièges transformables et, plus particulièrement, ceux d'entre eux qui sont aptes à occuper deux positions différentes de manière à pouvoir recevoir à volonté soit un adulte soit un enfant, et l'application d'un tel siège à un véhicule automobile notamment terrestre par exemple pour une place arrière.

Les sièges transformables et en particulier ceux qui peuvent recevoir à volonté soit un adulte, soit un enfant sans qu'il soit nécessaire de les équiper d'accessoires particuliers sont bien connus. De tels sièges trouvent une application particulière à bord des véhicules automobiles notamment terrestres et tout spécialement pour une place arrière.

Diverses solutions ont déjà été proposées. Un type de solutions concerne un siège dont l'assise est en deux parties, une partie postérieure fixe et une partie antérieure mobile montée à l'aide de deux couples de biellettes latérales qui sont disposées en pseudo-parallélélogramme afin de permettre une rotation avec élévation de son niveau de la partie antérieure mobile par rapport à la partie postérieure fixe. Des exemples de réalisation sont par exemple décrits dans les documents FR-A-2 613 672, FR-A-2 677 588 et FR-A-2 692 209 (correspondant au préambule de la revendication indépendante 1). Un autre type de solution concerne un siège dont le dossier est en deux parties, une partie haute fixe et une partie basse mobile montée à la manière d'un abattant de secrétaire et retenu par des chaînettes, compas ou similaires latéraux. Des exemples de réalisation sont par exemple décrits dans le document FR-A-2 693 688.

Si de tels types de solutions donnent relativement satisfaction, ils ne sont cependant pas parfaits car pour des raisons d'encombrement l'importance du changement de niveau de la partie mobile est relativement limitée et aussi par ce qu'aucune de ces solutions n'assure un maintien latéral convenable d'un enfant assis sur la partie mobile lorsqu'un tel siège transformable est placé dans la position où il peut recevoir un enfant.

L'invention a pour but de remédier à la plupart des inconvénients brièvement énumérés à l'aide d'un siège transformable simple, peu encombrant, facile à mettre en oeuvre, qui satisfait aux normes de sécurité édictées par les Pouvoirs Publics ou des instances professionnelles et qui est d'un coût de fabrication et de montage relativement modique tout en conservant un confort maximal y compris pour la position où il est apte à recevoir un passager adulte.

L'invention a pour objet un siège transformable qui comprend un fond, un dossier avec une armature pour recevoir un coussin, une assise avec une armature pour recevoir un coussin qui présente une face supérieure et une face inférieure et qui est divisé en un tronçon postérieur fixe proche du dossier et en un tronçon antérieur qui est monté mobile entre une position normale où le siège est apte à recevoir un passager adulte et une position auxiliaire où le siège est apte à recevoir un passager enfant à l'aide d'une articulation qui relie ces fond et tronçon antérieur. Un tel siège est remarquable en ce que l'articulation comprend un embiellage avec deux bouts opposés dont l'un d'eux est relié à ce fond par un axe transversal et dont l'autre est relié à ce tronçon antérieur par un autre axe transversal de manière que dans la position normale le tronçon antérieur soit dans le prolongement du tronçon postérieur et de manière que dans la position auxiliaire le tronçon antérieur soit situé au-dessus du tronçon postérieur après rotation selon ces deux axes et retournement face pour face selon l'axe reliant embiellage et tronçon antérieur, en ce qu'il comprend un appui pour définir la position auxiliaire après rotation et basculement du tronçon antérieur et un verrou pour immobiliser le tronçon antérieur au moins après rotation et basculement dans la position auxiliaire.

L'invention a aussi pour objet l'application d'un siège du type précédemment indiqué à un véhicule automobile notamment terrestre de préférence pour une place arrière.

D'autres caractéristiques de l'invention apparaîtront à la lecture de la description et des revendications qui suivent ainsi qu'à l'examen du dessin annexé, donné seulement à titre d'exemple, où :
- la Figure 1 est une vue perspective partielle schématique d'un siège transformable selon l'invention dans sa position normale pour un passager adulte, illustré pour l'application particulière à un siège de véhicule automobile terrestre pour place arrière;
- la Figure 2 est une vue analogue, illustrée sous un angle différent du siège de la Figure 1 en position auxiliaire pour un passager enfant;
- la Figure 3 est une vue de côté schématique du siège selon l'invention dans la position qu'il occupe sur la Figure 2;
- la Figure 4 d'une manière schématique illustre sur les vues perspectives 4A, 4B et 4C un constituant d'un siège selon l'invention dans diverses positions qu'il occupe lors de la mise en oeuvre du siège;
- la Figure 5 est une vue analogue à celle de la Figure 4 qui illustre sur ses Figures 5A, 5B et 5C une autre variante d'exécution d'un constituant d'un siège selon l'invention; et

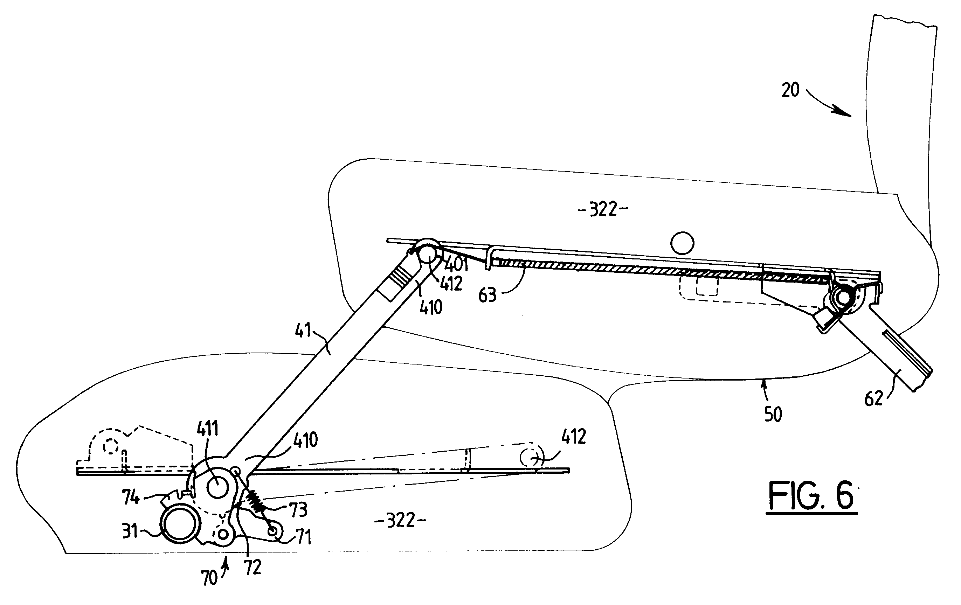

- la Figure 6 est une vue de détail schématique partielle d'un siège selon l'invention.

Les sièges transformables et en particulier ceux qui sont utilisés à bord des véhicules automobiles notamment terrestres par exemple pour les places arrière, sont bien connus dans la technique. C'est pourquoi dans ce qui suit on ne traitera que de ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté. En particulier, il pourra se reporter utilement aux documents précités.

Pour la commodité de l'exposé, on décrira successivement chacun des constituants d'un siège transformable selon l'invention avant d'en exposer au besoin la fabrication, le montage et la mise en oeuvre.

Dans ce qui suit, on utilise toujours un même numéro de référence pour identifier un élément homologue, quel que soit le mode de réalisation ou sa variante d'exécution.

Dans ce qui suit, un siège transformable selon l'invention est décrit à propos d'une application spécifique à un véhicule automobile notamment terrestre et en particulier pour une place arrière. Il est clair qu'une telle application n'est donnée qu'à titre illustratif et que les informations valent aussi qu'il s'agisse d'une place avant ou d'une place arrière et que le siège soit multiplace ou non.

Un siège transformable selon l'invention comprend, essentiellement, un fond 10, un dossier 20, une assise 30, une articulation 40, un appui 50, un verrou 60, s'il y a lieu des moyens de pré-positionnement 70, et, de préférence, au moins un panneau latéral 80 avec un dispositif d'ancrage 90.

Le fond 10 du siège fait partie s'il y a lieu de l'armature de l'assise 30 ou bien fait partie d'un piètement P associé à l'assise voire du plancher sur lequel repose le siège proprement dit.

Le dossier 20 comprend une armature 21, de préférence métallique mécano-soudée de tout type classique approprié, apte à recevoir un coussin 22 de tout type classique approprié fait d'un rembourrage et d'un revêtement. S'il y a lieu, et de préférence, un tel dossier est équipé d'un repose-tête 23, amovible ou non, dont l'ossature porte une matelassure et un revêtement et se prolonge par exemple par des colonnettes engagées dans des puits ou analogues du dossier comme cela est classique à bord des véhicules automobiles terrestres.

L'assise 30 comprend une armature 31 et un coussin 32 dont la configuration générale est classique et rappelée précédemment à propos du dossier. Ce coussin 32 est délimité notamment par une face 3201 supérieure et une face 3202 inférieure. Ce coussin 32 est divisé en un tronçon 321 postérieur fixe, proche du dossier 20 et en un tronçon 322 antérieur qui est monté mobile entre une position normale où le siège est apte à recevoir un passager adulte et une position auxiliaire où le siège est apte à recevoir un passager enfant comme on le comprendra par la suite.

L'articulation 40 relie le fond 10 et le tronçon antérieur mobile 322. Cette articulation 40 comprend un embiellage 41 avec deux bouts 410 opposés. L'un des bouts opposés 410 est relié au fond 10 par un axe 411 transversal et l'autre des deux bouts opposés 410 est relié au tronçon antérieur mobile 322 par un autre axe 412 transversal. L'embiellage 41 comprend par exemple deux bielles indépendantes placées latéralement de part et d'autre du tronçon antérieur mobile 322, ou bien comprend un élément unique en U dont les deux branches parallèles sont placées latéralement de part et d'autre du tronçon antérieur mobile 322 et dont le pont 401 qui relie ces deux branches parallèles constitue l'un de deux axes transversaux 411, 412, par exemple l'axe 412 qui relie l'embiellage 41 au tronçon antérieur mobile 322. Les axes transversaux 411 et 412 sont faits de toute manière appropriée classique et sont constitués par exemple par des paliers lisses ou à roulement qui reçoivent une broche ou cheville ou analogue. Ceci est classique et il n'est pas nécessaire de s'y étendre davantage.

L'appui 50 sert à définir la position auxiliaire que prend le siège lorsqu'il est placé dans cette position où il est apte à recevoir un passager enfant. Cet appui est par exemple constitué par le contact de la face supérieure 3201 du tronçon postérieur fixe 321 avec la face supérieure du tronçon antérieur mobile 322 comme on le comprendra par la suite. L'appui 50 peut être constitué aussi par une butée de tout type approprié classique résultant du contact physique de deux parties, solidaire par exemple de l'armature du tronçon antérieur mobile du coussin d'assise et une partie complémentaire correspondante associée au reste du siège par exemple à l'armature d'assise ou au fond par exemple. Il est clair qu'un tel appui peut être simple ou multiple par exemple de chaque côté.

Le verrou 60 comprend une gâche 61 et un pêne 62 qui coopèrent ensemble et qui sont l'un associé au tronçon antérieur mobile 322 et l'autre au reste du siège. Dans le mode de réalisation illustré la gâche 61 est portée par le tronçon postérieur fixe 321 de l'assise et le pêne 62 est porté par le tronçon antérieur mobile 322. Il est clair que la solution inverse peut être adoptée. De préférence, le verrou 60 est tel que l'un de ces pêne et gâche est monté mobile et escamotable. Au besoin, une timonerie 63 de tout type approprié classique, articulée ou souple telle que par exemple un câble dit Bowden, relie celui de ces pêne et gâche qui est mobile de manière à le faire saillir automatiquement dans une position érigée par exemple à l'encontre d'une sollicitation élastique tel un ressort en épingle à cheveux qui le retient normalement dans une position escamotée, ou inversement, afin de permettre un enclenchement automatique du verrou lorsqu'on fait prendre au siège sa position auxiliaire où il et apte à recevoir un passager enfant. Un tel verrou est par exemple d'un type analogue à celui utilisé habituellement pour les boucles des ceintures de sécurité qui équipent normalement les sièges pour véhicules automobiles terrestres ou bien encore d'un type similaire à celui utilisé habituellement pour maintenir fermé les hayons de coffre ou les capots de moteur de ces véhicules. Il est clair qu'un tel verrou peut être simple ou multiple par exemple de chaque côté.

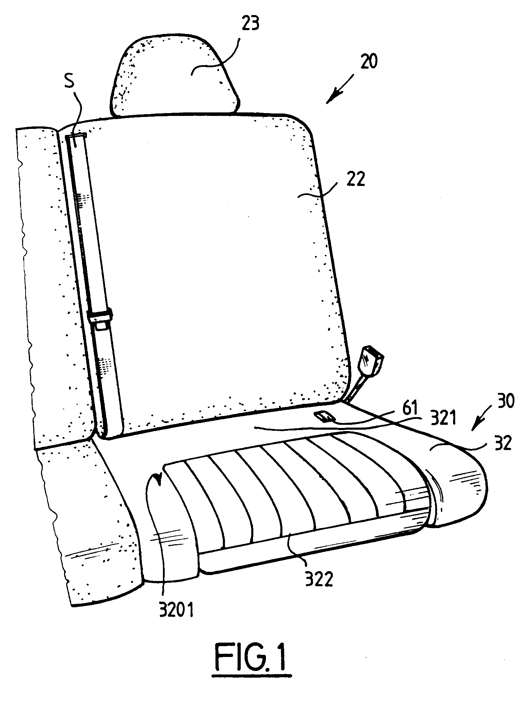

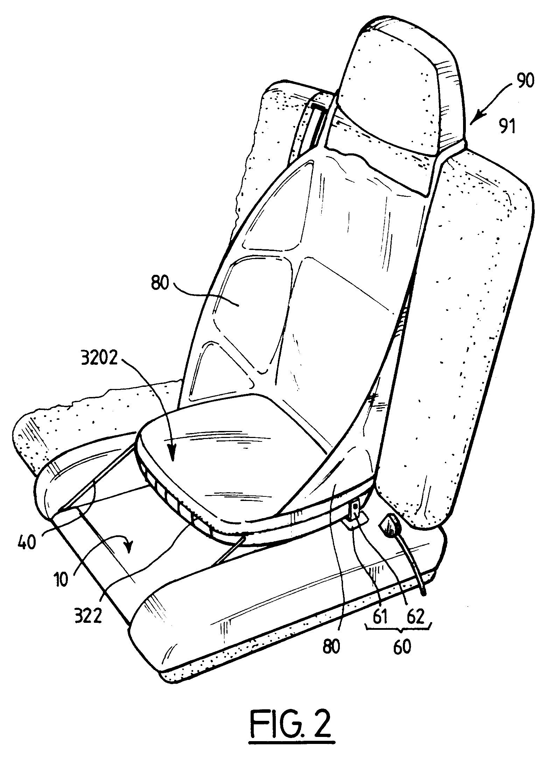

Lorsqu'on utilise un verrou du type des boucles qui équipent les ceintures de sécurité, un tel verrou peut se présenter à la manière d'un "prolongateur" ou similaire qui est monté sur le tronçon antérieur mobile et qui est pourvu à l'une de ses extrémités d'un pêne et à l'autre de ses extrémités d'une gâche. Ce pêne du prolongateur est destiné à coopérer et à s'enclencher dans la gâche d'une boucle de ceinture de sécurité fixée à un pédoncule relié au plancher du véhicule, comme il est classique et illustré sur les figures 1 et 2 du dessin, et cette gâche du prolongateur est destinée à recevoir le pêne de la boucle de la ceinture de sécurité qui équipe normalement le siège.

Dans ce qui précède, on a décrit un appui 50 et un verrou 60 qui sont distincts. Il est clair que ces deux constituants peuvent être réunis en un mécanisme unique, simple ou multiple, qui assure simultanément ces deux fonctions.

Les moyens de prépositionnement 70 lorsqu'on en utilise, sont interposés entre le fond 10 et l'articulation 40, et ils agissent sur l'embiellage 41 de manière à maintenir le tronçon antérieur mobile 322 dans l'une au moins des deux positions normale et auxiliaire du siège et, de préférence, dans les deux. Ces moyens de prépositionnement 70 comprennent, par exemple un cliquet 71 basculant ou similaire et un rochet 72 tournant ou similaire à double effet, placé sur un secteur de cercle et vers lequel le cliquet basculant est sollicité par un ressort 73 afin de venir normalement à son contact pour les raisons que l'on comprendra par la suite. Ces moyens de prépositionnement 70 comprennent aussi un support 74 fixé de toutes manières appropriées, tel le soudage ou le collage par exemple à l'armature d'assise 31. A la place d'un mécanisme à cliquet et rochet on peut utiliser un "bonhomme à ressort" ou similaire.

Chaque panneau latéral 80 est escamotable de manière à être mobile entre une position repliée qu'il peut prendre lorsque le tronçon antérieur mobile 322 est dans la position normale et une position déployée qu'il peut prendre lorsque le tronçon antérieur mobile 322 est dans la position auxiliaire, pour les raisons que l'on comprendra par la suite. Selon un mode de réalisation, chaque panneau latéral 80 est fixé au tronçon antérieur mobile 322 et est fait de pans 81 relativement rigides qui sont reliés entre eux par des plis 82 souples qui sont agencés de manière qu'en position repliée les pans 81 soient au contact les uns des autres et reposent contre la face inférieure 3202 du tronçon antérieur mobile 322 en position normale, et de manière qu'en position déployée, les pans 81 forment une paroi apte à maintenir un enfant assis sur le tronçon antérieur mobile 322 en position auxiliaire. De préférence, les panneaux latéraux sont réunis par un dos 83 escamotable lui aussi de la même manière ou d'une manière similaire à celle des panneaux latéraux. Selon un autre mode de réalisation, chaque panneau latéral et/ou le dos est fait d'un voile souple enroulable qui est monté de préférence sur un enrouleur à rappel automatique de tout type approprié connu s'il y a lieu avec un bloqueur à inertie par exemple d'un type analogue à ceux utilisés pour les ceintures de sécurité montées à bord des véhicules automobiles terrestres. Un tel enrouleur est fixé par exemple au tronçon antérieur mobile 322 voire au reste du siège de manière que par exemple l'extrémité libre du voile soit apparente et saisissable dans l'interstice qui sépare le tronçon antérieur mobile en position normale du reste du siège. S'il y a lieu, l'un au moins des panneaux latéraux 80 est transpercé d'au moins un ajour 801 pour le passage d'une ceinture de sécurité S pour les raisons qui apparaîtront par la suite.

Le dispositif d'ancrage 90 est porté par l'un au moins des panneaux latéraux 80 afin de retenir le ou les panneaux latéraux en position déployée et, s'il y a lieu, de participer ou d'aider au déploiement des panneaux initialement en position repliée. Un tel dispositif d'ancrage 90 comprend un organe de maintien 91 destiné à coopérer avec le dossier 20. De préférence, l'organe de maintien 91 coopère avec le repose-tête 23. Cet organe de maintien 91 se présente par exemple à la manière d'une sangle 92 élastique ou non, et d'un seul tenant ou en deux brins que l'on peut réunir à l'aide d'un fermoir. Cet organe de maintien 91 est par exemple simplement passé derrière le repose-tête, comme illustré, ou bien accroché à l'une au moins des colonnettes du repose-tête ou des puits qui les reçoivent.

Tous les constituants d'un siège transformable selon l'invention sont faits dans des matériaux traditionnels métalliques et/ou synthétiques qui sont travaillés et mis en forme selon des techniques classiques appropriées. Tous ces constituants sont réunis assemblés et montés comme cela ressort clairement des figures du dessin.

On exposera maintenant la mise en oeuvre d'un tel siège selon l'invention.

On suppose qu'un siège transformable selon l'invention est initialement dans la position où il est illustré sur la Figure 1, c'est-à-dire qu'il est dans sa position normale où il est apte à recevoir un passager adulte par exemple, et dans laquelle il est normalement maintenu par les moyens de prépositionnement.

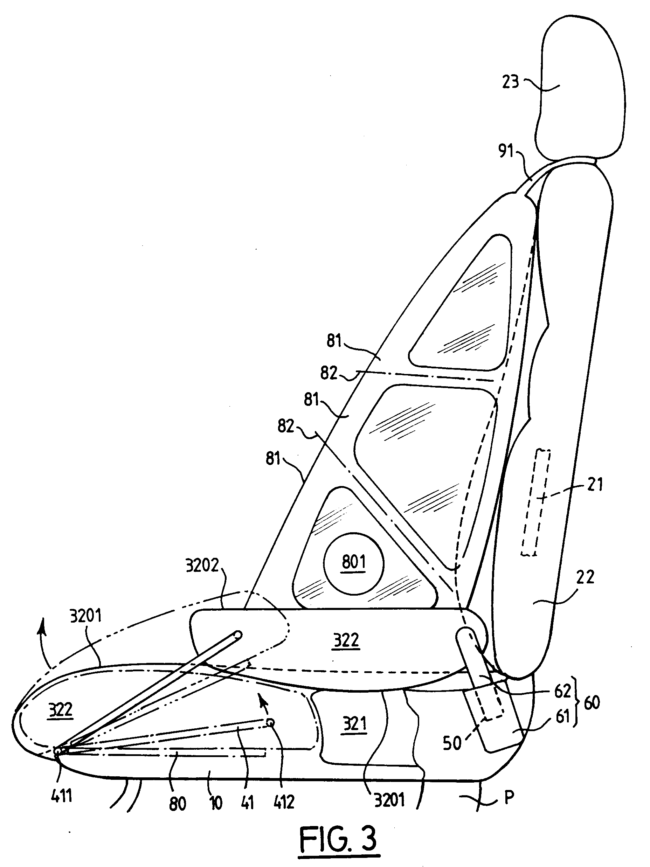

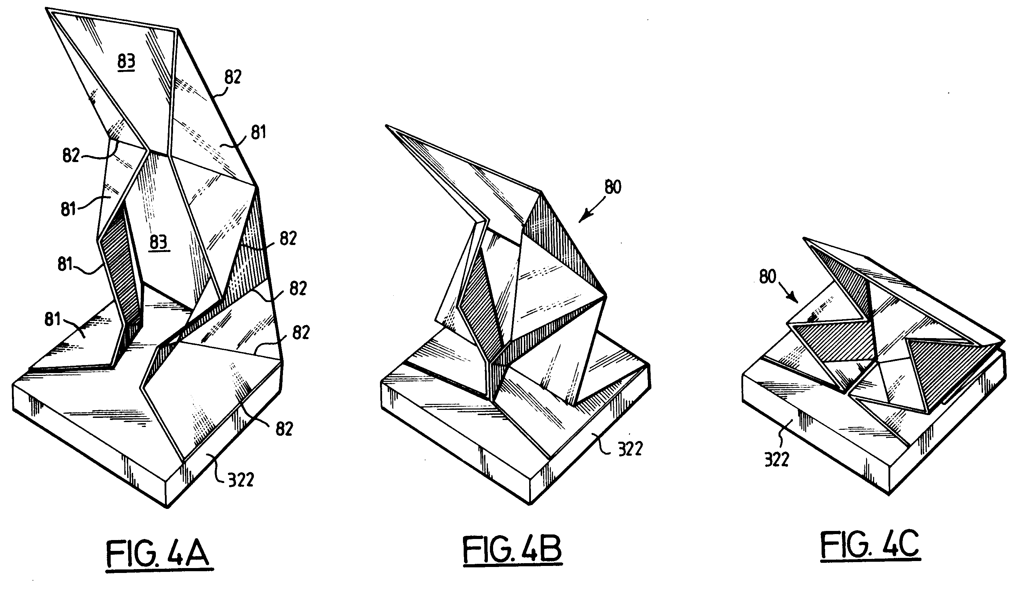

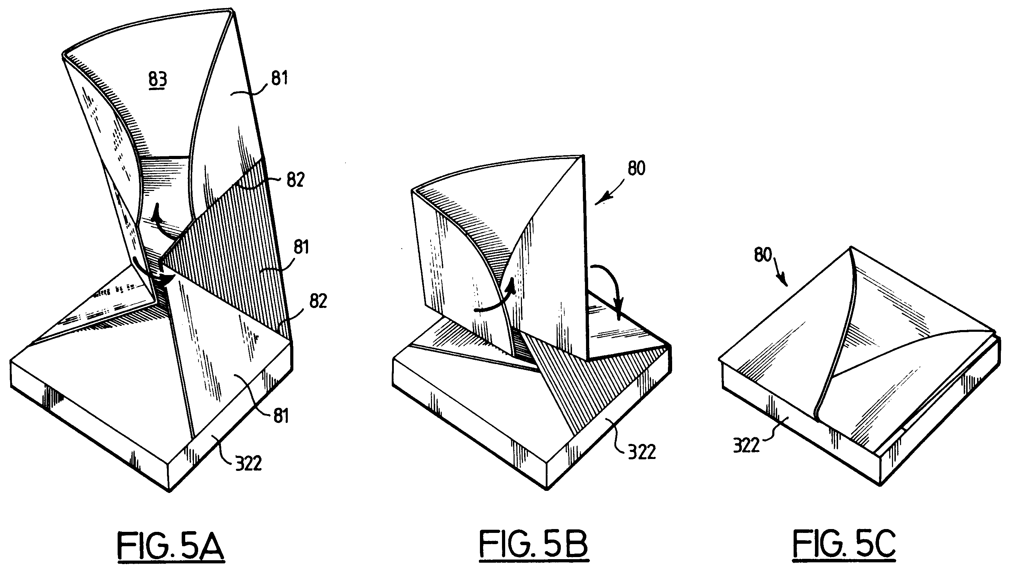

Pour faire passer le siège dans la position de la Figure 1 à sa position auxiliaire où il est apte à recevoir un passager enfant de la Figure 2, on opère comme indiqué par la suite. On saisit le tronçon antérieur mobile pour lui faire quitter la situation illustrée par une succession de traits et de points simples sur la Figure 3 en surmontant le couple résistant développé par les moyens de prépositionnement, afin de le placer dans une situation intermédiaire par rotation autour des deux axes transversaux, comme illustré par exemple par une succession de traits et de points triples sur cette même figure. Ensuite, il suffit de retourner face pour face le tronçon antérieur mobile seulement autour de l'axe qui le relie à l'embiellage pour lui communiquer la situation où il est illustré en trait continu. Les moyens de prépositionnement agissent en particulier sur l'articulation de manière que l'embiellage maintienne le tronçon antérieur mobile maintenant non plus dans le prolongement du tronçon postérieur fixe mais dans la position qui permet le retournement face pour face du tronçon antérieur mobile. Ce retournement face pour face du tronçon antérieur mobile agit au besoin sur la timonerie qui provoque alors l'érection du pêne dans une situation où il peut s'engager naturellement dans la fente de la gâche du verrou et immobiliser automatiquement ainsi le tronçon antérieur mobile dans la position où il est illustré sur la Figure 3. On observera que lors de la rotation et du retournement du tronçon antérieur mobile, les panneaux latéraux au besoin avec le dos restent repliés et escamotés par exemple contre la face inférieure du tronçon antérieur mobile. Il suffit alors de saisir l'organe de maintien du dispositif d'ancrage porté par l'un au moins des panneaux latéraux pour les faire passer de leur position repliée où ils sont au contact les uns des autres et reposent contre la face inférieure du tronçon antérieur mobile à la position déployée illustrée sur la Figure 2 ou sur la Figure 3 en trait continu. Le déploiement ou le repliement s'opère par exemple comme illustré sur les diverses vues schématiques des Figures 4 et 5. Déploiement terminé, il suffit de fixer le dispositif d'ancrage au dossier du siège par exemple à son repose-tête. Le siège transformable selon l'invention est alors apte à recevoir un passager enfant.

On observera que lorsque l'un au moins des panneaux latéraux est transpercé d'un ajour, un tel ajour permet le passage de la ceinture de sécurité qui équipe normalement le siège afin de maintenir un enfant assis sur le siège en position auxiliaire d'une manière efficace qui satisfait aux normes de sécurité sans qu'il soit nécessaire de recourir à une ceinture de sécurité spéciale.

Lorsqu'on veut replacer le siège en position auxiliaire illustrée sur la Figure 2 dans la position normale où il est illustré sur la Figure 1, il suffit d'opérer en ordre inverse après ouverture du verrou et après escamotage des panneaux latéraux pour pouvoir retourner face pour face le tronçon antérieur mobile puis le faire tourner dans l'alignement du tronçon postérieur fixe.

Les panneaux latéraux sont par exemple faits en une toile forte confectionnée en un matériau approprié et s'il y a lieu "préempesée" dans la zone des plis à la manière habituellement utilisée dans l'industrie du vêtement pour marquer de manière permanente les plis de pantalon. On peut aussi utiliser un complexe fait d'une âme en mousse de polyéthylène revêtue de deux couches de tissu et obtenue par thermocompression avec des parties amincies qui forment des plis. S'il y a lieu, ces plis présentent naturellement une certaine élasticité de manière que lorsqu'on libère le dispositif d'ancrage du dossier, les pans des panneaux latéraux aient une tendance inhérente et spontanée à passer de la position déployée à la position repliée. Ce passage de la position déployée à la position repliée est obtenu automatiquement lorsqu'on utilise un enrouleur à rappel automatique d'un type de celui indiqué précédemment.

On voit que grâce à l'invention on a obtenu une rehausse d'assise incorporée au siège.

On observera que la position d'implantation des axes transversaux respectivement sur le fond et sur le tronçon antérieur mobile est fonction de la taille de l'embiellage et de la conformation du siège proprement dit pour ce qui concerne notamment l'épaisseur ou hauteur du coussin d'assise et les dimensions propres aux tronçons antérieur mobile et postérieur fixe. De même on observera que la rotation initiale ou finale qui précède ou suit le basculement face pour face, peut se faire dans un sens ou dans l'autre en fonction de l'implantation retenue.

On observera que le coussin qui équipe le tronçon antérieur mobile peut être fait de manières différentes pour la face supérieure et pour la face inférieure tant en ce qui concerne son revêtement externe apparent et visible dont l'aspect et/ou la nature peuvent être différents qu'en ce qui concerne son rembourrage interne dont la consistance et/ou la densité et l'élasticité peuvent être différentes d'où une amélioration de l'esthétique et/ou du confort qui tient compte notamment des différences des masses et des morphologies qui existent entre un passager adulte et un passager enfant. On obtient en particulier de la sorte un confort différencié et adapté à chaque passager enfant ou adulte sans détériorer le moins du monde celui recherché habituellement par un adulte.

On observera aussi qu'en position auxiliaire du siège, un enfant assis sur le tronçon antérieur mobile de l'assise basculé et retourné, dispose d'un repose-pieds constitué par la partie du fond ainsi démasquée d'où une amélioration du confort.

On observera que du fait du faible encombrement en particulier de l'embiellage, l'implantation est notablement facilitée.

On voit donc que grâce au siège transformable selon l'invention, il est possible d'obtenir à partir d'un siège normalement destiné à un adulte, un siège confortable pour un enfant qui lui assure un bon maintien latéral au niveau du dossier et qui lui garantit une sécurité maximale notamment par utilisation de la ceinture de sécurité existant normalement à bord du véhicule pour la place considérée.

Ce qui précède met bien en lumière les particularités distinctives de l'invention, l'intérêt qu'elle offre et les avantages qu'elle procure.

## Revendications

1. Siège transformable comprenant un fond (10), un dossier (20) avec une armature (21) pour recevoir un coussin (22), une assise (30) avec une armature (31) pour recevoir un coussin (32) qui présente une face (3201) supérieure et une face (3202) inférieure et qui est divisé en un tronçon (321) postérieur fixe proche du dossier (20) et en un tronçon (322) antérieur qui est monté mobile entre une position normale où le siège est apte à recevoir un passager adulte et une position auxiliaire où le siège est apte à recevoir un passager enfant à l'aide d'une articulation (40) qui relie ces fond (10) et tronçon antérieur mobile (322), cette articulation (40) comprenant un embiellage (41) avec deux bouts (410) opposés dont l'un d'eux (410) est relié à ce fond (10) par un axe (411) transversal et dont l'autre est relié à ce tronçon antérieur mobile (322) par un autre axe (412) transversal de manière que dans la position normale le tronçon antérieur mobile (322) soit dans le prolongement du tronçon postérieur fixe (321) et de manière que dans la position auxiliaire le tronçon antérieur mobile (322) soit situé au-dessus du tronçon postérieur fixe (321), siège caractérisé en ce que ledit tronçon antérieur mobile (322) se situe dans la position auxiliaire après rotation selon ces deux axes (411, 412) et retournement face pour face selon l'axe (412) reliant embiellage (41) et tronçon antérieur mobile (322) et en ce que le siège comprend un appui (50) pour définir la position auxiliaire après rotation et basculement du tronçon antérieur mobile (322) et un verrou (60) pour immobiliser le tronçon antérieur mobile (322) au moins après rotation et basculement dans la position auxiliaire.

2. Siège selon la revendication 1, caractérisé en ce que le fond (10) fait partie de l'armature (31) de l'assise (30).

3. Siège selon la revendication 1 et équipé d'un piètement pour le faire reposer sur un plancher, caractérisé en ce que le fond (10) fait partie du piètement voire du plancher.

4. Siège selon l'une quelconque des revendications 1 à 3, caractérisé en ce que l'embiellage (41) comprend deux bielles placées latéralement de part et d'autre du tronçon antérieur mobile (322).

5. Siège selon l'une quelconque des revendications 1 à 3, caractérisé en ce que l'embiellage (41) comprend un élément en U dont les deux branches parallèles sont placées latéralement de part et d'autre du tronçon antérieur mobile (322) et dont le pont (401) qui relie ces deux branches constitue l'un de ces deux axes transversaux (411, 412).

6. Siège selon l'une quelconque des revendications 1 à 5, caractérisé en ce que l'appui (50) résulte du contact de la face supérieure (3201) du tronçon postérieur fixe (321) et de celle du tronçon antérieur mobile (322) après rotation et basculement de ce dernier (322).

7. Siège selon l'une quelconque des revendications 1 à 5, caractérisé en ce que l'appui (50) est fait d'une butée.

8. Siège selon l'une quelconque des revendications 1 à 7, caractérisé en ce que le verrou (60) comprend une gâche (61) et une pêne (62) coopérant qui sont l'un associé au tronçon antérieur mobile (322) et l'autre au reste du siège.

9. Siège selon la revendication 8, caractérisé en ce qu'il comprend un verrou (60) dont l'un de ces pêne (62) et gâche (61) est monté mobile et escamotable et au besoin une timonerie (63) reliée à celui de ces pêne (62) et gâche (61) qui est mobile de manière à le faire saillir dans une position érigée afin de permettre un enclenchement automatique du verrou (60) après rotation et retournement du tronçon antérieur mobile (322) en position auxiliaire.

10. Siège selon l'une quelconque des revendications 1 à 9, caractérisé en ce qu'il comprend des moyens de prépositionnement (70) qui sont interposés entre fond (10) et articulation (40) et qui agissent sur l'embiellage (41) de manière à maintenir le tronçon antérieur mobile (322) dans l'une au moins des positions normale et auxiliaire.

11. Siège selon l'une quelconque des revendications 1 à 10, caractérisé en ce qu'il comprend au moins un panneau (80) latéral escamotable qui est associé au tronçon antérieur mobile (322) et qui est mobile entre une position repliée qu'il peut prendre lorsque le tronçon antérieur mobile (322) est dans la position normale et une position déployée qu'il peut prendre lorsque le tronçon antérieur mobile (322) est dans la position auxiliaire.

12. Siège selon la revendication 11, caractérisé en ce que chaque panneau latéral (80) est fixé au tronçon antérieur mobile (322) et est fait de pans (81) relativement rigides reliés par des plis (82) souples qui sont agencés de manière qu'en position repliée les pans (81) soient au contact les uns des autres et reposent contre la face inférieure (3202) du tronçon antérieur mobile (322) en position normale et de manière qu'en position déployée ils forment une paroi apte à maintenir un enfant assis sur le tronçon antérieur mobile (322) après rotation et retournement en position auxiliaire.

13. Siège selon la revendication 11, caractérisé en ce que chaque panneau latéral (80) est fait d'un voile souple enroulable monté sur un enrouleur à rappel automatique fixé au tronçon antérieur mobile (322) voire au reste du siège.

14. Siège selon l'une quelconque des revendications 11 à 13, caractérisé en ce que l'un au moins des panneaux latéraux (80) est transpercé d'au moins un ajour (801) pour le passage d'une ceinture de sécurité.

15. Siège selon l'une quelconque des revendications 11 à 14, caractérisé en ce qu'il comprend un dispositif d'ancrage (90) porté par l'un au moins des panneaux latéraux (80) afin de le retenir en position déployée.

16. Siège selon la revendication 15, caractérisé en ce que le dispositif d'ancrage (90) comprend un organe de maintien (91) destiné à coopérer avec le dossier (20).

17. Siège selon la revendication 16, caractérisé en ce que l'organe de maintien (91) est destiné à coopérer avec le repose-tête (23).

18. Application d'un siège conforme à l'une quelconque des revendications 1 à 17 à un véhicule automobile notamment terrestre de préférence pour une place arrière.

## Claims

1. Convertible seat comprising a base (10), a back (20) having a frame (21) for receiving a cushion (22), a seating portion (30) having a frame (31) for receiving a cushion (32) which has an upper face (3201) and a lower face (3202) and which is divided into a fixed rear portion (321) next to the back (20) and into a front portion (322) which is mounted to be movable between a normal position in which the seat is capable of receiving an adult passenger and an auxiliary position in which the seat is capable of receiving a child passenger, by means of an articulation (40) which connects the base (10) and the movable front portion (322), the articulation (40) comprising a rod system (41) having two opposing ends (410), one of which (410) is connected to the base (10) about a transverse axis (411) and the other of which is connected to the movable front portion (322) about another transverse axis (412) in such a manner that, in the normal position, the movable front portion (322) is a continuation of the fixed rear portion (321) and in such a manner that, in the auxiliary position, the movable front portion (322) is located above the fixed rear portion (321), which seat is characterised in that the movable front portion (322) is located in the auxiliary position after rotation about the two axes (411, 412) and inversion face to face about the axis (412) connecting the rod system (41) and the movable front portion (322), and in that the seat comprises a support (50) for defining the auxiliary position after rotation and tilting of the movable front portion (322), and a latch (60) for immobilising the movable front portion (322) at least after rotation and tilting into the auxiliary position.

2. Seat according to Claim 1, characterised in that the base (10) forms part of the frame (31) of the seating portion (30).

3. Seat according to Claim 1, equipped with a bottom for causing it to rest on a floor, characterised in that the base (10) forms part of the bottom or the floor.

4. Seat according to any one of Claims 1 to 3, characterised in that the rod system (41) comprises two connecting rods placed laterally one on each side of the movable front portion (322).

5. Seat according to any one of Claims 1 to 3, characterised in that the rod system (41) comprises a U-shaped element of which the two parallel arms are placed laterally one on each side of the movable front portion (322) and of which the bridge (401) connecting those two arms forms one of the two transverse axes (411, 412).

6. Seat according to any one of Claims 1 to 5, characterised in that the support (50) results from the contact of the upper face (3201) of the fixed rear portion (321) and the upper face of the movable front portion (322) after rotation and tilting of the latter (322).

7. Seat according to any one of Claims 1 to 5, characterised in that the support (50) is formed by an abutment.

8. Seat according to any one of Claims 1 to 7, characterised in that the latch (60) comprises a cooperating catch (61) and latch plate (62), one of which is associated with the movable front portion (322) and the other of which is associated with the remainder of the seat.

9. Seat according to Claim 8, characterised in that it comprises a latch (60) of which either the latch plate (62) or the catch (61) is mounted to be movable and retractable, and, if necessary, a linkage (63) connected to whichever of the latch plate (62) and catch (61) is movable, in such a manner as to cause it to move into a set-up position in order to permit the automatic engagement of the latch (60) after the rotation and inversion of the movable front portion (322) into the auxiliary position.

10. Seat according to any one of Claims 1 to 9, characterised in that it comprises prepositioning means (70) which are interposed between the base (10) and the articulation (40) and which act on the rod system (41) in such a manner as to maintain the movable front portion (322) in at least one of the normal and auxiliary positions.

11. Seat according to any one of Claims 1 to 10, characterised in that it comprises at least one fold-away side panel (80) which is associated with the movable front portion (322) and which is movable between a folded position which it can assume when the movable front portion (322) is in the normal position and an unfolded position which it can assume when the movable front portion (322) is in the auxiliary position.

12. Seat according to Claim 11, characterised in that each side panel (80) is fixed to the movable front portion (322) and is formed by relatively rigid portions (81) connected by flexible folds (82) which are arranged in such a manner that, in the folded position, the portions (81) are in contact with one another and rest against the lower face (3202) of the movable front portion (322) in the normal position and in such a manner that, in the unfolded position, they form a wall capable of keeping a child seated on the movable front portion (322) after rotation and inversion into the auxiliary position.

13. Seat according to Claim 11, characterised in that each side panel (80) is produced from a flexible web which can be rolled up and which is mounted on an automatic-return winder fixed to the movable front portion (322) or to the remainder of the seat.

14. Seat according to any one of Claims 11 to 13, characterised in that at least one of the side panels (80) has at least one opening (801) for the passage of a safety belt.

15. Seat according to any one of Claims 11 to 14, characterised in that it comprises an anchoring device (90) carried by at least one of the side panels (80) in order to hold it in the unfolded position.

16. Seat according to Claim 15, characterised in that the anchoring device (90) comprises a holding device (91) that is to cooperate with the back (20).

17. Seat according to Claim 16, characterised in that the holding device (91) is to cooperate with the head-rest (23).

18. Application of a seat according to any one of Claims 1 to 17 to a motor vehicle, especially a terrestrial motor vehicle, preferably for the rear seating.

## Patentansprüche

1. Umwandelbarer Sitz, der ein Unterteil (10), eine Rücklehne (20) mit einer Verstärkung (21) zur Aufnahme eines Polsters (22), eine Sitzfläche (30) mit einer Verstärkung (31) zur Aufnahme eines Polsters (32) aufweist, das eine Oberseite (3201) und eine Unterseite (3202) aufweist und das in ein hinteres feststehendes Teilstück (321) nahe bei der Rücklehne (20) und ein vorderes Teilstück (322) unterteilt ist, das zwischen einer Normalstellung, in der der Sitz zur Aufnahme eines erwachsenen Fahrgastes ausgebildet ist, und einer Hilfsstellung, in der der Sitz zur Aufnahme eines Kindes als Fahrgast ausgebildet ist, beweglich montiert ist mithilfe eines Gelenks (40), das das Unterteil (10) und das vordere bewegliche Teilstück (322) verbindet und das eine Kurbelvorrichtung (41) mit zwei entgegengesetzten Enden (410) aufweist, von denen eines mit dem Boden (10) durch eine Querachse (411) verbunden ist und von denen das andere mit dem vorderen beweglichen Teilstück (322) durch eine andere Querachse (412) derart verbunden ist, daß sich das vordere bewegliche Teilstück (322) in der Normalstellung in Verlängerung des hinteren feststehenden Teilstücks (321) und daß sich das vordere bewegliche Teilstück (322) in der Hilfsstellung über dem hinteren feststehenden Teilstück (321) befindet, **dadurch gekennzeichnet, daß** sich das vordere bewegliche Teilstück (322) nach einer Rotation um die beiden Achsen (411, 412) und einem Umwenden seiner Seiten um die Achse (412), die die Kurbelvorrichtung (41) und das vordere bewegliche Teilstück (322) verbindet, in der Hilfsstellung befindet, und daß der Sitz ein Auflager (50) zur Festlegung der Hilfsstellung nach der Drehung und dem Umklappen des vorderen beweglichen Teilstücks (322) und eine Verriegelung (60) zur Fixierung des vorderen beweglichen Teilstücks (322) zumindest nach der Rotation und dem Umklappen in die Hilfsstellung aufweist.

2. Sitz nach Anspruch 1, dadurch gekennzeichnet, daß das Unterteil (10) Teil der Verstärkung (31) der Sitzfläche (30) ist.

3. Sitz nach Anspruch 1, der mit einem Gestell ausgerüstet ist, damit er auf einer festen Unterlage ruht, dadurch gekennzeichnet, daß das Unterteil (10) Teil des Gestells beziehungsweise der festen Unterlage ist.

4. Sitz nach einem der Ansprüche 1 bis 3, dadurch gekennzeichnet, daß die Kurbelvorrichtung (41) zwei Kurbeln aufweist, die seitlich beidseits des vorderen beweglichen Teilstücks (322) angeordnet sind.

5. Sitz nach einem der Ansprüche 1 bis 3, dadurch gekennzeichnet, daß die Kurbelvorrichtung (41) ein U-förmiges Bauteil aufweist, dessen beide parallele Schenkel seitlich beidseits des vorderen beweglichen Teilstücks (322) angeordnet sind und dessen Querstück (401), das die beiden Schenkel miteinander verbindet, eine der beiden Querachsen (411, 412) bildet.

6. Sitz nach einem der Ansprüche 1 bis 5, dadurch gekennzeichnet, daß sich das Auflager (50) durch den Kontakt der Oberseite (3201) des hinteren feststehenden Teilstücks (321) mit der des vorderen beweglichen Teilstücks (322) nach dessen Rotation und Umklappen ergibt.

7. Sitz nach einem der Ansprüche 1 bis 5, dadurch gekennzeichnet, daß das Auflager (50) durch einen Anschlag gebildet ist.

8. Sitz nach einem der Ansprüche 1 bis 7, dadurch gekennzeichnet, daß die Verriegelung (60) einen Schließhaken (61) in Zusammenwirkung mit einem Riegel (62) aufweist, von denen der eine mit dem vorderen beweglichen Teilstück (322) und der andere mit dem übrigen Sitz verbunden ist.

9. Sitz nach Anspruch 8, dadurch gekennzeichnet, daß er eine Verriegelung (60), bei der der Riegel (62) oder der Schließhaken (61) beweglich und versenkbar ist, und bedarfsweise einen Steuerzug (63) aufweist, der mit dem beweglichen Riegel (62) oder Schließhaken (61), derart verbunden ist, daß er dessen Vorspringen in eine aufgerichtete Stellung nach der Rotation und dem Kippen des vorderen beweglichen Teilstücks (322) in die Hilfsstellung veranläßt, damit ein automatisches Einrasten der Verriegelung (60) ermöglicht ist.

10. Sitz nach einem der Ansprüche 1 bis 9, dadurch gekennzeichnet, daß er Mittel zur Voreinstellung (70) aufweist, die zwischen dem Unterteil (10) und dem Gelenk (40) vorgesehen sind und auf die Kurbelvorrichtung (41) derart einwirken, daß das vordere bewegliche Teilstück (322) in mindestens einer der Stellungen Normal- und Hilfsstellung gehalten ist.

11. Sitz nach einem der Ansprüche 1 bis 10, dadurch gekennzeichnet, daß er mindestens eine versenkbare Seitenfläche (80) aufweist, die mit dem vorderen beweglichen Teilstück (322) verbunden ist und zwischen einer gefalteten Stellung, die sie einnimmt, wenn sich das vordere bewegliche Teilstück (322) in der Normalstellung befindet, und einer entfalteten Stellung, die sie einnimmt, wenn sich das vordere bewegliche Teilstück (322) in der Hilfsstellung befindet, beweglich ist.

12. Sitz nach Anspruch 11, dadurch gekennzeichnet, daß jede Seitenfläche (80) an dem vorderen beweglichen Teilstück (322) befestigt ist und aus relativ steifen Feldern besteht, die durch biegsame Falten (82) verbunden sind, die derart angeordnet sind, daß in der gefalteten Stellung die Felder miteinander in Kontakt stehen und auf der Unterseite (3202) des vorderen beweglichen Teilstücks (322) in Normalstellung ruhen und daß sie in der entfalteten Stellung eine Wand bilden, die zum Halten eines auf dem vorderen beweglichen Teilstück (322) nach dessen Rotation und Kippen sitzenden Kindes ausgebildet ist.

13. Sitz nach Anspruch 11, dadurch gekennzeichnet, daß jede Seitenfläche (80) aus einem elastischen, aufrollbaren Stoff hergestellt ist, der auf einer Wickelvorrichtung mit automatischem Einzug befestigt ist, die am vorderen beweglichen Teilstück (322) bzw. am übrigen Sitz befestigt ist.

14. Sitz nach einem der Ansprüche 11 bis 13, dadurch gekennzeichnet, daß mindestens eine der Seitenflächen (80) mit mindestens einem Durchbruch (801) für den Durchgang des Sicherheitsgurtes versehen ist.

15. Sitz nach einem der Ansprüche 11 bis 14, dadurch gekennzeichnet daß er eine Verankerungsvorrichtung (90) aufweist, die von mindestens einer der Seitenflächen (80) getragen ist, damit sie in entfalteter Stellung gehalten ist.

16. Sitz nach Anspruch 15, dadurch gekennzeichnet, daß die Verankerungsvorrichtung (90) ein Halteelement (91) zur Zusammenwirkung mit der Rücklehene (20) aufweist.

17. Sitz nach Anspruch 16, dadurch gekennzeichnet, daß das Halteelement (91) zur Zusammenwirkung mit der Kopfstütze (23) bestimmt ist.

18. Verwendung eines Sitzes nach einem der Ansprüche 1 bis 17 in einem selbstfahrenden Fahrzeug, insbesondere einem Landfahrzeug, vorzugsweise für einen hinteren Sitzplatz.
